Europäisches Patentamt

European Patent Office

Office européen des brevets

(19)

(11) Publication number: **0 064 402**

**A1**

## (12) EUROPEAN PATENT APPLICATION

(21) Application number: **82302235.5**

(22) Date of filing: **30.04.82**

(51) Int. Cl.³: **H 01 M 2/08**
**H 01 M 6/12**

(30) Priority: **01.05.81 US 259439**

(43) Date of publication of application:
**10.11.82 Bulletin 82/45**

(84) Designated Contracting States:
**DE GB**

(71) Applicant: **Ray-O-Vac International Corporation**
**2625 Concord Pike**
**Wilmington Delaware 19803(US)**

(72) Inventor: **Kobylarcik, George F.**
**4 Quinn Circle**
**Madison Wisconsin 53713(US)**

(74) Representative: **Greenstreet, Cyril Henry et al,**
**Thames House (Fifth floor) Millbank**
**London SW1P 4QF(GB)**

(54) Electrochemical cells and grommets therefor.

(57) A sealing grommet (10) for a button cell has a U-section channel (6) to house the rolled rim (26) of the anode cap (22) and an inwardly extending flange (44) that provides a seating for the barrier (46) separating the anode and cathode compartments.

Fig.2.

EP 0 064 402 A1

- 1 -

## Electrochemical cells and grommets therefor

This invention relates to primary electrochemical cells of the type known (because of their shape and size) as button cells, and more particularly to sealing grommets for use in such cells.

A button cell consists essentially of a two-part case comprising a dished metal cathode container separated peripherally from a metal anode cap by an electrically insulating grommet and enclosing a layer of cathode material separated by a barrier from a layer of anode material and electrolyte.

Button cells are used in electronic timepieces, pace-makers, hearing aids, pocket calculators, telecommunication equipment and many other kinds of electronic apparatus. In recent years the current consumption of such devices has been progressively reduced, and as a result a demand has arisen for increasingly smaller batteries, in particular for very thin cells. However, the construction of very thin cells presents considerable technological difficulties. The electrodes and other cell components must be made very thin and disposed very close together, and very little space is available for non-active components such as seals. The problem confronting the designer is thus to find a way to achieve good resistance to leakage in a thin cell which would have little space for cell components if standard cell designs were simply scaled down. A design is needed that provides maximum space within the battery for the active components, has a minimal amount of parts, and could be produced economically and yet have good leakage resistance.

The present invention provides a solution to this problem through a novel design of annular sealing grommet.

The grommet according to the invention is in the form of an ring of resilient, electrically insulating material having upper, lower, inner and outer faces, with an annular U-section channel in the upper face and an annular flange extending radially inwards from the upper part of the inner face.

The ring thus has a generally U-shaped section, with a flange extending towards the centre of the ring from the inner leg of the U. The outer leg of the U preferably extends above the top face of the inner leg and flange to form a raised rim, and advantageously an annular bead projects radially inwardly into the channel from the upper part of the outer leg of the U. The radial width of the inner leg, extended by the flange, is advantageously greater than that of the outer leg of the U.

In a button cell, the grommet is seated in the cathode container with the U-shaped channel housing the rolled rim of the anode cap. When the cell is closed by crimping the edge of the cathode container, the outer leg of the U is forced over the upturned edge of the rolled rim of the anode cap, so that the bead forms an additional seal. Within the cell, the barrier separating the anode and cathode material is seated against the underside of the flange of the grommet.

The grommet should be made from a material which is not attacked by the electrolyte of the cell in which it is to be used, which has high compression and shear strength, and which is capable of withstanding large forces without distortion of shape caused by cold flow. Suitable materials for use in the alkaline electrolytes often used in button cells include polyolefins, such as high density polypropylene and polyethylene, nylons such as 6,6 nylon, 6, 12 nylon, 6 nylon and 11 nylon, and polytetrafluoroethylene and similar materials.
Particularly preferred materials are the hard nylon
compositions sold by Celanese and Dupont which
are 6, 6 nylons.

A preferred form of the grommet and of a
button cell incorporating it will now be described,
by way of example, with reference to the accompanying
drawings, in which:

Figure 1 is a cross-sectional view of a
grommet according to the invention; and

Figure 2 is a cross-sectional view of a button
cell incorporating the grommet of Figure 1.

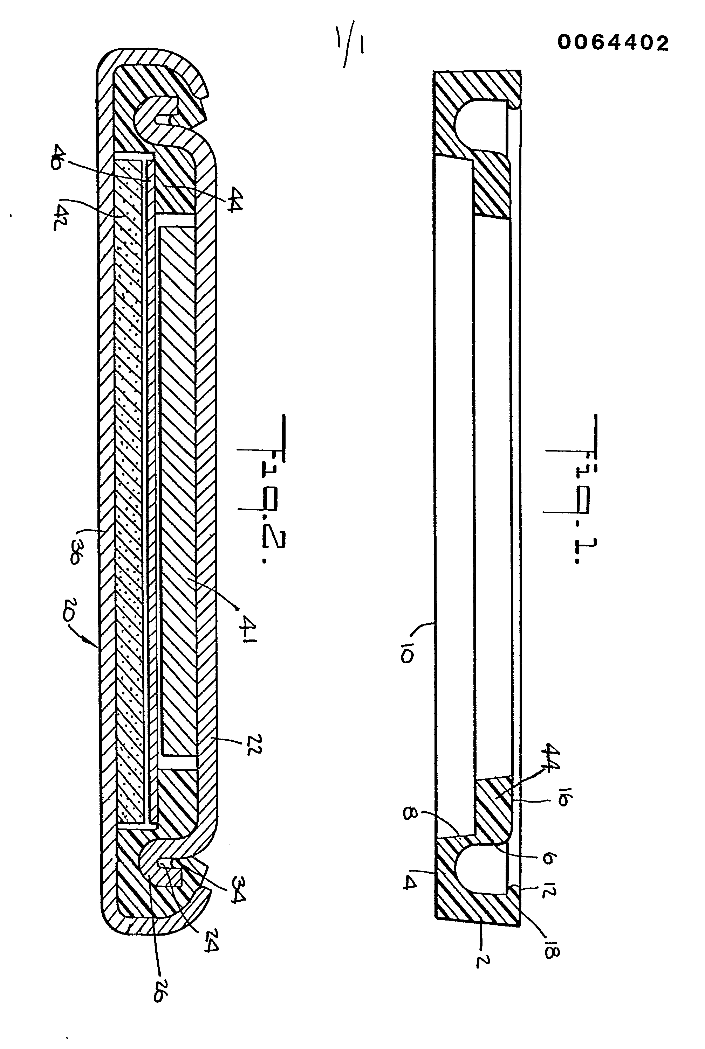

As shown in Figure 1, the grommet 10 has an
annular U-shaped channel 6 recessed in its upper
face 16 and a flange 44 extending radially inwards
from the upper part of its inner face 8.  The outer
leg of the U extends above the level of the upper face
16 to form a raised rim 18 having an annular bead 12
around the top of its inner edge.  The outer face 2,
the inner face 8 and the inner face of the flange 44
are all tapered downwards.  The lower face 4 of the
grommet is substantially flat and parallel to the
upper face 1.

The way in which the grommet is incorporated
into a very thin button cell is shown in Figure 2,
where it separates and electrically insulates the
cathode container 36 and the anode cap 22 of a cell 20,
and defines with the cathode container, anode cap
and separator 46 compartments in which are located
anode material 41 and cathode material 42.  The rolled
edge 26 of the anode cap 22 is housed in the
channel 6, and when the cell is closed by crimping
the rim of the cathode container inwards the bead 34
(which corresponds to 12 in Figure 1) is forced into
the channel 24 in the rolled edge 26 of the anode cap.

The separator 46 is seated against the underside of the flange 44, thus providing a peripheral seal between the anode and cathode compartments, which prevents premature self-discharge or gassing of the anode. The pressure exerted through the grommet on the contents of the cell on closing the cell by crimping also compresses the barrier and the cathode and thus helps to establish electrical contact between the cathode and the positive current collector. The shape of the grommet also ensures that both the positive and negative seal paths (i.e. the paths which would have to be followed by electrolyte from either of the electrode compartments to the exterior) are long and convoluted, thus improving the resistance of the cell to leakage. The bead on the outer rim of the grommet renders the seal path to the anode compartment particularly convoluted.

Preferably the surfaces of the grommet in sealing registry with the anode cap and cathode container are coated with a liquid sealant or adhesive prior to assembly of the cell. If this is applied by dip coating, it will collect in the channel, thus ensuring an abundance of sealant at the point of highest compression of the cell components.

0064402

Claims

1.      An annular grommet of resilient, electrically
insulating material having upper, lower, inner and
outer faces, characterised by an annular U-section
channel (6) recessed in its upper face (16) and an
annular flange (44) extending radially inwards from
the upper part of the inner face (8).

2.      A grommet according to claim 1 in which the
outer rim (18) is raised above the upper face (16).

3.      A grommet according to claim 1 or claim 2 in      -
which an annular bead (12, 34) projects radially inwards
from the upper part of the outer rim (18).

4.      A grommet according to any preceding claim in
which the outer face (2), the inner face (8) and the
inner face of the flange (44) all taper downwards.

5.      A primary electrochemical button cell
characterised in that it includes a grommet (10)
according to any preceding claim seated in a dished
cathode container (36), an anode cap (22) having a
rolled rim (26) housed in the U-section channel (6)
in the grommet, and a separator (46) seated against the
underside of the flange (44) to define cathode and
anode compartments with the cathode container (36)
and the anode cap (22) respectively.

6.      A button cell according to claim 6 in which
the sealing surfaces of the grommet are coated with
adhesive.

Fig.2.

Fig.1.

0064402

European Patent
Office

EUROPEAN SEARCH REPORT

Application number

EP 82302235.5

| DOCUMENTS CONSIDERED TO BE RELEVANT | | | CLASSIFICATION OF THE APPLICATION (int. Cl. ³) |
| --- | --- | --- | --- |
| Category | Citation of document with indication, where appropriate, of relevant passages | Relevant to claim | |
| A | US - A - 4 150 221 (COUEILLE)<br>* Fig. 1, part 8 *<br>-- | 1,5 | H 01 M 2/08<br>H 01 M 6/12 |
| A | GB - A - 1 385 632 (MALLORY)<br>* Fig., part 26 *<br>---- | 1,5 | |

**TECHNICAL FIELDS SEARCHED (Int.Cl.³)**

H 01 M

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
| --- | --- | --- |
| VIENNA | 04-08-1982 | LUX |